# EUROPÄISCHE PATENTSCHRIFT

(11) **EP 1 522 214 B1**
(45) Veröffentlichungstag und Bekanntmachung des Hinweises auf die Patenterteilung: **27.02.2008**
(21) Anmeldenummer: 04104762.2
(22) Anmeldetag: 29.09.2004
(51) Int. Cl.: A01D 41/127, A01F 29/20

(54) **Erntemaschine mit einer Überwachungseinrichtung zur Überwachung der Schärfe von Schneidmessern und/oder ihres Abstands zu einer Gegenschneide**
Harvester with a controle device for controlling the sharpness of cutting knifes and/or their clearance to the counterknife
Machine de récolte avec un dispositif de contrôle de l'affutage de couteaux de coupe et/ou leur distance au contre-couteau

(30) Priorität: 07.10.2003 DE 10346412
(43) Veröffentlichungstag der Anmeldung: 13.04.2005
(73) Patentinhaber: DEERE & COMPANY, Moline, Illinois 61265-8098 (US)
(72) Erfinder: Kormann, Georg, 66424, Homburg (DE)
(74) Vertreter: Holst, Sönke

(56) Entgegenhaltungen:
- DE-A1- 4 023 114
- US-A- 6 119 442
- US-A1- 2003 217 538

## Beschreibung

Die Erfindung betrifft eine Erntemaschine mit einer Aufnahmeeinrichtung zur Aufnahme von Erntegut, einer mit wenigstens einer Schneide versehenen Schneideinrichtung zum Schneiden oder Häckseln des Ernteguts, und mit einer Überwachungseinrichtung, die betreibbar ist, ein Signal zu erzeugen, das eine Information über die Schärfe der Schneide und/oder ihren Abstand zu einer Gegenschneide enthält, die mit einem Sollwert verglichen wird.

Erntemaschinen eingangs genannter Art, wie Feldhäcksler, Ballenpressen oder Ladewagen, sind mit Schneideinrichtungen zum Schneiden bzw. Häckseln des Ernteguts versehen. Derartige Schneideinrichtungen werden auch an Mähdreschern verwendet, um das ausgedroschene Stroh zu zerkleinern, wenn gewünscht. Für das Schneidergebnis ist es wichtig, dass die Schneide oder Schneiden der Schneideinrichtung eine hinreichende Schärfe aufweisen. Bei stumpfen Schneiden vergrößert sich auch der Energiebedarf für den Schneidvorgang. Falls das Erntegut nicht im freien Schnitt, d. h. ohne Verwendung einer Gegenschneide, zerteilt wird, findet eine Gegenschneide Verwendung. Der Abstand zwischen der Gegenschneide und der Schneide ist ebenfalls kritisch und möglichst genau einzustellen.

Bei den derzeit im Handel erhältlichen Erntemaschinen hängt es von der Entscheidung des Fahrers ab, ob und wann ein Schleifvorgang der Schneide erfolgt. Auch die Verstellung der Gegenschneide wird derzeit nur auf Veranlassung des Fahrers durchgeführt.

In verschiedenen Veröffentlichungen wurden Einrichtungen zur Feststellung der Schärfe von Häckselmessern beschrieben. Gemäß der DE 40 23 113 A und der DE 40 23 114 A werden von den Schneiden in induktiven Gebern induzierte Spannungen ausgewertet. In der DE 199 03 153 A wird vorgeschlagen, die Schnittkräfte zu erfassen. Die DE 102 35 919 A und DE 103 03 504 A offenbaren mechanische Erfassungen der Schwingungen der Gegenschneide zur Schärfenbestimmung.

Zur Messung des Abstands zwischen den Schneiden und der Gegenschneide wurden eine Reihe von Einrichtungen vorgeschlagen (DE 41 34 957 A, DE 43 35 786 A, EP 0 706 752 A), bei denen an der Gegenschneide ein Klopfsensor angebracht ist, dessen Ausgangssignal eine Funktion des Abstands zwischen der Gegenschneide und den Häckselmessern ist. Zur Messung des Abstands zwischen der Gegenschneide und den Häckselmessern sind weiterhin magnetische Sensoren bekannt, die einen mit der Gegenschneide verbundenen Permanentmagneten und eine Induktionsspule umfassen, in denen durch die vorbeistreichenden Häckselmesser eine EMK induziert wird, die verstärkt und detektiert wird (EP 0 943 888 A).

In der DE 38 16 206 A wird eine Schneideinrichtung für Doppelgewebe beschrieben, die ein Messer aufweist, dessen genaue Positionierung und Schärfe mittels eines optoelektronischen Sensors untersucht wird. Er setzt sich aus einer Kamera, die das Messer erfasst, und einer Auswerteelektronik zusammen. Dieser Druckschrift lässt sich keine Anregung entnehmen, den Sensor in einer landwirtschaftlichen Erntemaschine zu verwenden.

Weiterhin liegen eine Reihe von Veröffentlichungen vor, in denen Erntegut optisch überwacht wird. Die US 6 119 442 A beschreibt einen Mähdrescher, bei dem eine Kamera auf das verarbeitete Erntegut gerichtet ist. Die Signale der Kamera werden ausgewertet und mit Sollwerten verglichen. Abhängig vom Ergebnis des Vergleichs werden Betriebsparameter des Mähdreschers verändert. In der EP 1 053 671 A wird vorgeschlagen, gehäckseltes Erntegut durch einen im nahen Infrarotbereich arbeitenden Sensor zu untersuchen, um Inhaltsstoffe zu erfassen. Aus den Messwerten des Sensors können auch Eigenschaften des Ernteguts abgeleitet werden, wie Rohfasergehalt oder Faserlänge. Diesen Schriften ist nicht entnehmbar, dass die Signale der optischen Sensoren zur Schärfenbestimmung oder Messung des Abstands zwischen Gegenschneide und Schneide geeignet sind.

Das der Erfindung zu Grunde liegende Problem wird darin gesehen, eine verbesserte Erntemaschine bereitzustellen, bei der die Entscheidung, ob ein Schärfen der Schneide oder eine Verstellung der Gegenschneide erforderlich ist, selbsttätig und exakt gefällt werden kann.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, eine Überwachungseinrichtung mit einem optisch arbeitenden Sensor zu verbinden, der betreibbar ist, die Schneideinrichtung optisch zu überwachen. Aus seinem Signal wird eine Information über die Schärfe der Schneide und/oder ihren Abstand zur Gegenschneide abgeleitet. Mit diesem System können auch defekte Messer und verschobene Messer detektiert werden. Alternativ oder zusätzlich wird das von der Schneideinrichtung geschnittene Erntegut, dessen Schnittlänge und -qualität von der Schärfe der Schneide und ggf. ihrem Abstand zur Gegenschneide abhängt, durch einen Sensor optisch überwacht, und das Signal des Sensors zur Gewinnung einer Information über die Schärfe der Schneide und/oder ihren Abstand zur Gegenschneide herangezogen. Die Überwachungseinrichtung stellt ein Ausgangssignal bereit, das eine Information über die Schärfe der Schneide und/oder den Abstand zur Gegenschneide enthält. Dieses Signal bzw. eine daraus abgeleitete Information wird durch den Fahrer oder selbsttätig mit einem Sollwert verglichen.

Ein Vorteil der Verwendung optischer Sensoren liegt in der erreichbaren Genauigkeit. Die Sensoren können, anders als die im Stand der Technik verwendeten induktiven bzw. mechanischen Sensoren, in einem gewissen Abstand von der Schneideinrichtung und somit in einer Position angebracht werden, in der sie den Einflüssen des Ernteguts und den von der Schneideinrichtung verursachten Vibrationen nur in einem relativ geringen Maß ausgesetzt werden. Außerdem kann ein Fehlen oder Defekt von Schneidmessern sofort erkannt und dem Fahrer mitgeteilt werden.

Abhängig von dem Ergebnis des Vergleichs kann dem Fahrer eine optische oder akustische Anzeige gegeben werden, die ihn veranlasst, einen Schleifvorgang durchzuführen bzw. den Abstand zwischen Schneideinrichtung und Gegenschneide neu einzustellen. Die genannten Vorgänge können auch ohne Einwirken des Fahrers selbsttätig und ggf. während der Fahrt oder des Erntevorgangs durchgeführt werden. Der Schleifvorgang kann ebenfalls durch den optischen Sensor erfasst werden, so dass bei einem anhand der Signale des Sensors im geeigneten Zeitpunkt beendeten Schleifvorgang nicht mehr Material abgeschliffen wird, als erforderlich. Analog wird der Verstellvorgang abhängig vom Signal des optischen Sensors beendet.

In einer Ausführungsform der Erfindung ist der sensitive Bereich eines Sensors der Überwachungseinrichtung auf die Schneideinrichtung gerichtet. Er erfasst somit die Form der Schneidkanten der Schneide und ist zur Erfassung ihrer Schärfe eingerichtet. Soll auch der Abstand zwischen Schneide und Gegenschneide erfasst werden, wird vorzugsweise zusätzlich die Gegenschneide optisch durch den Sensor erfasst.

Es sind verschiedene Möglichkeiten der Ausgestaltung des optischen Sensors denkbar. Zum Einen kann es sich um einen abbildenden Sensor handeln, d.h. um eine Kamera, die einen flächigen, ein- oder zweidimensional auflösenden Bildsensor aufweist. Dessen Signal wird vorzugsweise digitalisiert und mittels einer geeigneten Bildverarbeitungssoftware verarbeitet. Das Ergebnis dieser Verarbeitung ist eine Information über die Schärfe der Schneide bzw. ihren Abstand zur Gegenschneide. Um eine hinreichende Beleuchtung zu erzielen, kann eine Beaufschlagung des abzubildenden Bereichs mit Fremdlicht hilfreich sein. Die Lichtquelle kann punktförmig leuchten und die zu untersuchende Fläche abrastern oder sie kann großflächig leuchten. Zum Anderen kann es sich um einen nicht-abbildenden Sensor handeln, d. h. um ein lichtempfindliches Element, das ein von seiner Beleuchtungsstärke abhängiges Signal abgibt.

Derartige Sensoren können insbesondere mit abtastenden Lichtquellen verwendet werden, z. B. Lasern. Die in diesem Absatz beschriebenen Sensoren können zur Erfassung der Schneideinrichtung und möglicherweise der Gegenschneide verwendet werden, aber für das von der Schneideinrichtung abgegebene Erntegut.

Insbesondere zur Untersuchung des geschnittenen Ernteguts kann ein optischer Sensor (Spektrometer) Verwendung finden, der im Nahinfrarotbereich arbeitet. Die Schnittkanten des Ernteguts liefern andere Spektren als die nicht geschnittenen Flächen, da sie andere Oberflächenzusammensetzungen haben. Aus den gewonnenen Spektren lässt sich somit das Flächenverhältnis zwischen nicht-geschnittenen und geschnittenen Oberflächen und die Schnittlänge berechnen.

In der Zeichnung sind zwei nachfolgend näher beschriebene Ausführungsbeispiele der Erfindung dargestellt. Es zeigt:
- Fig. 1: eine erfindungsgemäße Erntemaschine in Seitenansicht und in schematischer Darstellung,
- Fig. 2: eine schematische Darstellung einer ersten Ausführungsform einer erfindungsgemäßen Überwachungseinrichtung, und
- Fig. 3: eine schematische Darstellung einer zweiten Ausführungsform einer erfindungsgemäßen Überwachungseinrichtung.

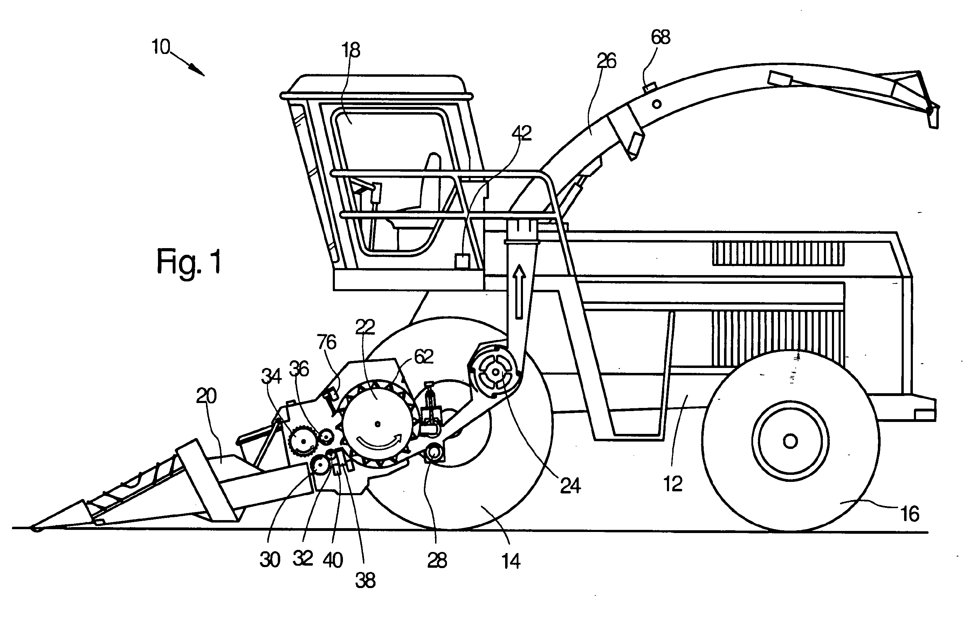

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Aufnahmeeinrichtung 20 zur Aufnahme von Erntegut einsehbar ist. Mittels der Aufnahmeeinrichtung 20 von einem Feld aufgenommenes Erntegut, z. B.

Mais, Gras oder dergleichen wird einer mit Schneidmessern 62 besetzten Schneideinrichtung 22 in der Art einer geschlossenen Häckseltrommel zugeführt. Die vorlaufenden Schneiden der Schneidmesser 62 häckseln das Erntegut in kleine Stücke und geben es einer Fördervorrichtung 24 auf. Das Gut verlässt die Erntemaschine 10 zu einem nebenher fahrenden Anhänger über einen um die Hochachse drehbaren und in der Neigung verstellbaren Austragsschacht 26. Zwischen der Schneideinrichtung 22 und der Fördervorrichtung 24 erstreckt sich eine Nachzerkleinerungsvorrichtung 28, durch die das zu fördernde Erntegut der Fördervorrichtung 24 tangential zugeführt wird.

Zwischen der Aufnahmevorrichtung 20 und der Schneideinrichtung 22 wird das Gut durch untere Vorpresswalzen 30, 32 und obere Vorpresswalzen 34, 36 transportiert. Die über den Umfang der Schneideinrichtung 22 verteilten Schneidmesser 62 wirken mit einer Gegenschneide 38 zusammen, um das Gut zu häckseln. Die Gegenschneide 38 ist mit einer Verstelleinrichtung 40 versehen, die zum Verfahren der Gegenschneide 38 in horizontaler Richtung auf die Schneideinrichtung 22 zu und von ihr fort eingerichtet ist. Die Verstelleinrichtung 40 dient zum Einstellen des Schneidspalts.

An der Oberseite des Austragschachts 26 befindet sich ein im Nahinfrarotbereich arbeitender optischer (spektroskopischer) Sensor 68, der ein Spektrometer enthält. Er beaufschlagt das den Austragschacht 26 durchströmende, gehäckselte Erntegut mit breitbandigem Infrarotlicht. Das durch das Erntegut reflektierte Licht wird einer Wellenlängenanalyse unterzogen. Anhand der gewonnenen Spektren können die Inhaltsstoffe des Ernteguts identifiziert und quantifiziert werden. Außerdem enthalten die Spektren eine Information über die Schnittlänge des Ernteguts, da die geschnittenen Oberflächen andere Spektren als die nicht geschnittenen Oberflächen abgeben. Der Sensor 68 kann aufgebaut sein, wie in der EP 1 053 671 A beschrieben.

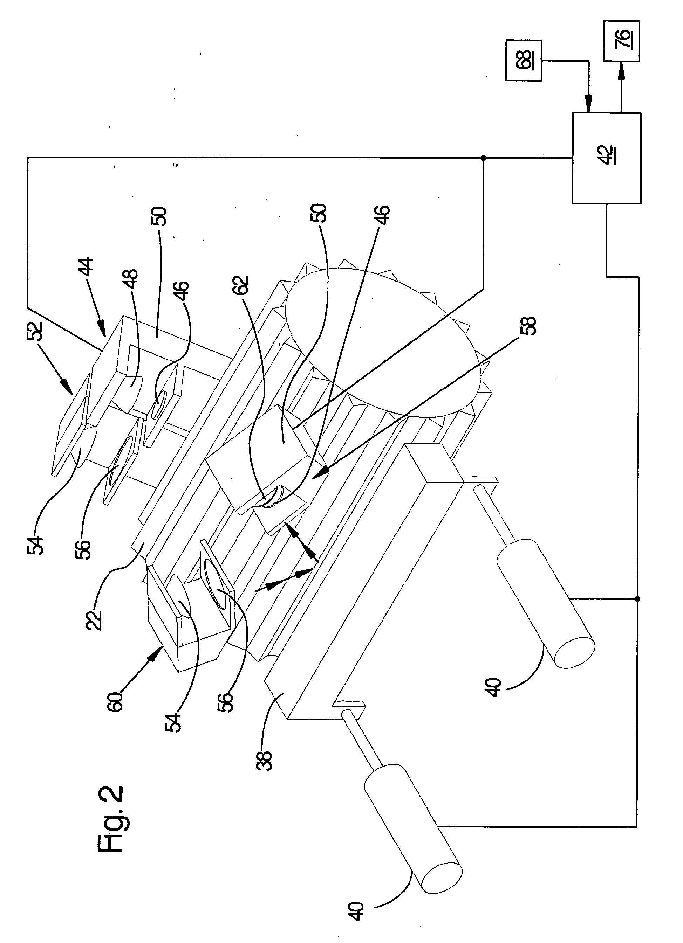

Eine erfindungsgemäße Überwachungseinrichtung zur Überwachung der Schärfe der Schneidmesser 62 sowie des Abstands zwischen der Gegenschneide 38 und den Schneidmessern 62 der Schneideinrichtung 22 ist in der Figur 2 detaillierter dargestellt. Sie umfasst eine Überwachungseinrichtung 42, die mit einer ersten Kamera 44 verbunden ist. Die erste Kamera 44 baut sich aus einem Objektiv 46, einem Bildsensor 48 (z. B. CCD) und einem Gehäuse 50 auf. Neben der Kamera 44 ist eine erste Beleuchtungseinrichtung 52 mit einer Lampe 54 und einem Kollimator 56 angeordnet. Eine zweite Kamera 58, deren Aufbau mit der ersten Kamera 44 übereinstimmt, ist ebenfalls mit der Überwachungseinrichtung 42 verbunden. Der zweiten Kamera 58 ist eine zweite Beleuchtungseinrichtung 60 zugeordnet, deren Aufbau mit der ersten Beleuchtungseinrichtung 52 übereinstimmt.

Die erste Beleuchtungseinrichtung 52 befindet sich im oberen Bereich der Schneideinrichtung 22 und beleuchtet ihn großflächig. Die erste Kamera 44 erfasst die Oberseite der Schneideinrichtung 22. Die zweite Beleuchtungseinrichtung 60 befindet sich bezüglich der Fahrtrichtung der Erntemaschine 10 rechts oberhalb der Gegenschneide 38 und des der Gegenschneide 38 benachbarten Bereichs der Schneideinrichtung 22 und beleuchtet die genannten Flächen großflächig. Die zweite Kamera 50 befindet sich bezüglich der Fahrtrichtung der Erntemaschine 10 links oberhalb der Gegenschneide 38 und des der Gegenschneide 38 benachbarten Bereichs der Schneideinrichtung 22 und beobachtet die genannten Flächen.

Durch die Objektive 46 entstehen auf den Bildsensoren 48 Abbildungen der Schneidmesser 62 (Kamera 44) und des Schneidspalts sowie des dem Schneidspalt benachbarten Bereichs der Schneidmesser 62 und der Gegenschneide 38 (Kamera 50).

Die Signale der Bildsensoren 48 werden der Überwachungseinrichtung 42 zugeführt. Sie werden dort digitalisiert und einer Bildverarbeitung unterzogen, in der zum Einen anhand der Signale der Kamera 44 die Schneidkanten der Schneidmesser 62 extrahiert und mit einer Sollform verglichen werden. Ergibt sich dabei, dass die Schneidkanten nicht hinreichend scharf sind, wird eine Schleifeinrichtung 76 aktiviert oder dem Fahrer ein entsprechender Hinweis gegeben. Analog wird der Schleifvorgang abhängig von den Signalen der Kamera 44 beendet.

Zum Anderen wird der Spalt zwischen der Gegenschneide 38 und den Schneidmessern 62 aus den Signalen der Kamera 50 extrahiert und mit einem Sollabstand verglichen. Ist er größer oder kleiner als entsprechende, vordefinierte Grenzwerte, veranlasst die Überwachungseinrichtung 42 eine selbsttätige Aktivierung der Verstelleinrichtung 40, um die Gegenschneide 38 in eine Sollposition zu den Schneidmessern 62 zu verbringen, oder gibt dem Fahrer einen Hinweis, entsprechend vorzugehen. Auch hier wird die Bewegung der Verstelleinrichtung 40 beendet, wenn die Überwachungseinrichtung 42 anhand der Signale der Kamera 50 erkennt, dass die Gegenschneide 38 ihre Sollposition erreicht hat.

Die Überwachungseinrichtung 42 erhält auch Signale vom spektroskopischen Sensor 68. Sie führt einen Vergleich zwischen der Schnittlänge, die vom spektroskopischen Sensor 68 gemessen wurde, und der nominellen Schnittlänge durch, die anhand der Drehzahlen der Schneideinrichtung 22 und der Vorpresswalzen 30 - 36 errechenbar ist. Ist die Schnittlänge größer als erwartet, wird ebenfalls ein Schleifvorgang der Schleifeinrichtung 76 veranlasst, entweder selbsttätig oder durch eine Information des Fahrers. Weisen die Signale des spektroskopischen Sensors 68 auf eine unzureichende Schnittqualität hin (zu große, ausgefaserte Oberfläche aufgrund unsauberen Schnitts), kann analog eine Verstellung der Gegenschneide 38 veranlasst werden.

Es wäre auch denkbar, auf die zweite Kamera 50 und die zweite Beleuchtungseinrichtung 60 zu verzichten, falls nur die Schärfe der Schneidmesser 62 erfasst werden soll. Man könnte auch die zweite Kamera 50 zur Bestimmung der Schärfe der Schneidmesser 62 verwenden und auf die erste Kamera 44 und die erste Beleuchtungseinrichtung 52 verzichten. Man könnte auch nur den spektroskopischen Sensor 68 verwenden oder auf ihn verzichten.

Bei dem beschriebenen Messvorgang ist insbesondere die Erfassung der Schnittkanten der Schneidmesser 62 problematisch, wenn sich die Schneideinrichtung 22 dreht. Man verwendet eine Kamera 44 mit entsprechender Geschwindigkeit und Auflösung oder versieht sie mit einem Hochgeschwindigkeitsverschluss, bzw. man nutzt eine gepulste Beleuchtungseinrichtung 52, die Blitze hinreichender Kürze abgibt. Alternativ oder zusätzlich wird die Kamera 44 nur genutzt, wenn sich die Schneideinrichtung 22 relativ langsam dreht oder steht. Da man mit der Kamera 50 nur den Spalt zwischen Gegenschneide 38 und den Schneidmessern 62 erfassen will, so dass eine aufgrund der sich drehenden Schneideinrichtung 22 unscharfe Abbildung der Schneidmesser 62 ohne Belang ist, während die von ihnen beschriebene Hüllkurve interessant ist, ist die Messung hier weniger kritisch.

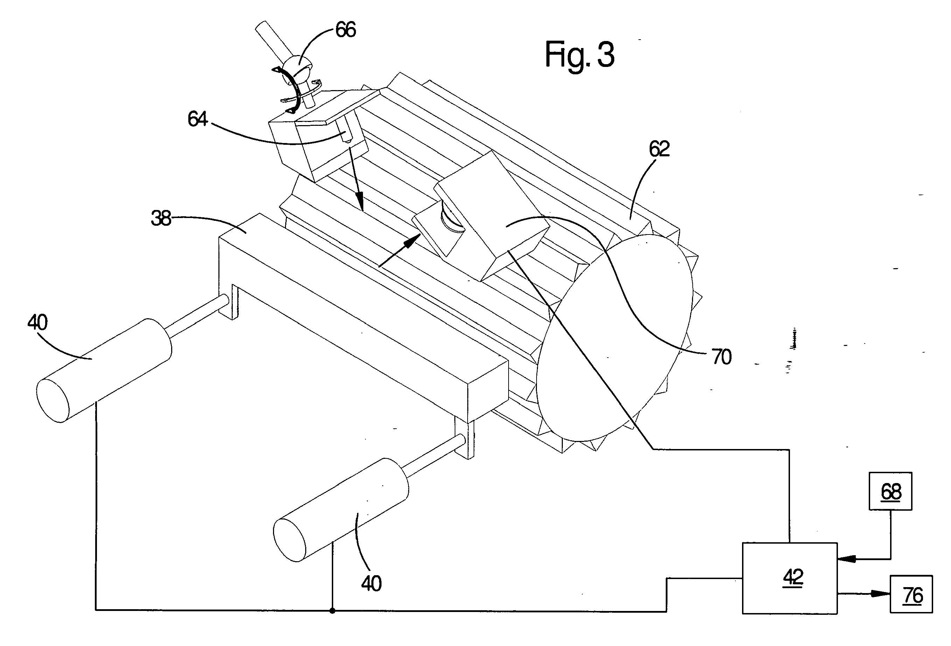

Eine zweite Ausführungsform der Erfindung ist in Figur 3 dargestellt. Mit der ersten Ausführungsform übereinstimmende Elemente sind mit denselben Bezugszeichen versehen. Hier findet ein Laser 64 Verwendung, der bezüglich der Fahrtrichtung der Erntemaschine 10 rechts oberhalb der Gegenschneide 38 angeordnet ist, also dort, wo sich in Figur 2 die zweite Beleuchtungseinrichtung 64 befindet. Der Laser 64 ist durch eine Verstelleinrichtung 66 in zwei Dimensionen verstellbar, d.h. er kann motorisch um die Hochachse und um eine horizontale, sich in Fahrtrichtung der Erntemaschine 10 erstreckende Achse verschwenkt werden. Eine Kamera 70, deren Aufbau mit dem der Kameras 44, 50 aus Figur 2 übereinstimmt, ist bezüglich der Fahrtrichtung der Erntemaschine 10 links oberhalb der Gegenschneide 38 angeordnet, also dort, wo sich in Figur 2 die zweite Kamera 50 befindet. Die Verstelleinrichtung 66 und die Kamera 70 sind mit der Überwachungseinrichtung 42 verbunden. Anstelle der Kamera 70 könnte auch ein nicht abbildender Sensor in Form einer Fotodiode o. ä. Verwendung finden.

Die Überwachungseinrichtung 42 veranlasst die Verstelleinrichtung 66, den Spalt zwischen der Gegenschneide 38 und den Schneidmessern 62 und die dem Spalt benachbarten Flächen der Gegenschneide 38 und der Schneidmesser 62 in der Fahrtrichtung und der dazu senkrechten, horizontalen Richtung nach und nach abzutasten. Dabei wird in der Kamera 70 eine Information über die Breite des Spalts generiert. Außerdem kann anhand des von den Schneidmessern 62 reflektierten Lichts ein Rückschluss über deren Schärfe gezogen werden. Analog zu der ersten Ausführungsform wird eine selbsttätige Aktivierung der Schleifeinrichtung 76 und/oder der Verstelleinrichtung 40 der Gegenschneide 38 veranlasst, wenn sich bei der Analyse der digitalisierten Ausgangssignale der Kamera 70 mittels der Bildverarbeitungssoftware in der Überwachungseinrichtung 42 herausstellt, dass die Schärfe bzw. Spaltbreite nicht mit Sollwerten übereinstimmt, bzw. es wird eine entsprechende Information an den Fahrer abgegeben. Die Beendigung des Schleif- bzw. Verstellvorgangs erfolgt ebenfalls vorzugsweise aufgrund entsprechender Signale der Kamera 70.

## Patentansprüche

1. Erntemaschine (10), mit einer Aufnahmeeinrichtung (20) zur Aufnahme von Erntegut, einer mit wenigstens einer Schneide versehenen Schneideinrichtung (22) zum Schneiden oder Häckseln des Ernteguts, und mit einer Überwachungseinrichtung (42), die betreibbar ist, ein Signal zu erzeugen, das eine Information über die Schärfe der Schneide und/oder ihren Abstand zu einer Gegenschneide (38) enthält, die mit einem Sollwert verglichen wird, **dadurch gekennzeichnet, dass** die Überwachungseinrichtung (42) mit einem Sensor verbunden ist, der die Schneideinrichtung (22) und/oder das geschnittene Erntegut optisch überwacht, aus dessen Signal die Überwachungseinrichtung die Information über die Schärfe der Schneide und/oder ihren Abstand zu einer Gegenschneide (38) ableitet.

2. Erntemaschine (10) nach Anspruch 1, **dadurch gekennzeichnet, dass** eine Schleifeinrichtung (76) zum selbsttätigen Schleifen der Schneide vorhanden ist, die abhängig vom Signal der Überwachungseinrichtung (42) angesteuert wird.

3. Erntemaschine (10) nach Anspruch 1 oder 2, **dadurch gekennzeichnet, dass** eine Verstelleinrichtung (40) zum selbsttätigen Verstellen der Position der Gegenschneide (38) vorhanden ist, die abhängig vom Signal der Überwachungseinrichtung (42) angesteuert wird.

4. Erntemaschine (10) nach einem der Ansprüche 1 bis 3, **dadurch gekennzeichnet, dass** die Überwachungseinrichtung (42) mit einem optischen Sensor verbunden ist, dessen sensitiver Bereich auf die Schneideinrichtung (22) gerichtet ist.

5. Erntemaschine (10) nach Anspruch 4, **dadurch gekennzeichnet, dass** der sensitive Bereich des optischen Sensors auf die Gegenschneide (38) und den benachbarten Bereich der Schneideinrichtung (22) gerichtet ist.

6. Erntemaschine (10) nach einem der Ansprüche 1 bis 5, **dadurch gekennzeichnet, dass** der optische Sensor ein abbildender Sensor, insbesondere eine Kamera (44, 50, 70) ist, dessen Ausgangssignal digitalisiert und mittels einer Bildverarbeitungssoftware verarbeitet wird.

7. Erntemaschine (10) nach einem der Ansprüche 4 bis 6, **dadurch gekennzeichnet, dass** die Schneideinrichtung (22) punktförmig, insbesondere durch einen Laser (64), oder großflächig beleuchtet wird.

8. Erntemaschine (10) nach einem der Ansprüche 1 bis 7, **dadurch gekennzeichnet, dass** ein optischer Sensor (68) stromab der Schneideinrichtung (22) mit dem geschnittenen Erntegut zusammenwirkt und die Länge des geschnittenen Ernteguts erfasst.

9. Erntemaschine nach Anspruch 8, **dadurch gekennzeichnet, dass** der optische Sensor (68) im Nahinfrarotbereich arbeitet.

10. Überwachungseinrichtung (42) mit optischen Sensoren für eine Erntemaschine (10) nach einem der vorhergehenden Ansprüche.

## Claims

1. Harvesting machine (10), comprising a receiving device (20) for the reception of harvested crop, a cutting device (22), provided with at least one cutting edge, for cutting or chopping the harvested crop, and comprising a monitoring device (42), which can be operated to generate a signal containing information about the sharpness of the cutting edge and/or its distance to an opposite cutting edge (38), which information is compared with a desired value, **characterized in that** the monitoring device (42) is connected to a sensor, which optically monitors the cutting device (22) and/or the cut harvested crop and from whose signal the monitoring device derives the information about the sharpness of the cutting edge and/or its distance to an opposite cutting edge (38).

2. Harvesting machine (10) according to Claim 1, **characterized in that** a grinding device (76) for the automatic grinding of the cutting edge is present, which is driven in dependence on the signal of the monitoring device (42).

3. Harvesting machine (10) according to Claim 1 or 2, **characterized in that** an adjusting device (40) for the automatic adjustment of the position of the opposite cutting edge (38) is present, which is driven in dependence on the signal of the monitoring device (42).

4. Harvesting machine (10) according to one of Claims 1 to 3, **characterized in that** the monitoring device (42) is connected to an optical sensor, the sensitive region of which is directed at the cutting device (22).

5. Harvesting machine (10) according to Claim 4, **characterized in that** the sensitive region of the optical sensor is directed at the opposite cutting edge (38) and the adjoining region of the cutting device (22).

6. Harvesting machine (10) according to one of Claims 1 to 5, **characterized in that** the optical sensor is an imaging sensor, in particular a camera (44, 50, 70), the output signal of which is digitalized and is processed by means of an image-processing software.

7. Harvesting machine (10) according to one of Claims 4 to 6, **characterized in that** the cutting device (22) is illuminated in a punctiform manner, in particular by a laser (64), or over a large area.

8. Harvesting machine (10) according to one of Claims 1 to 7, **characterized in that** an optical sensor (68) downstream of the cutting device (22) interacts with the cut harvested crop and registers the length of the cut harvested crop.

9. Harvesting machine according to Claim 8, **characterized in that** the optical sensor (68) operates in the near-infrared range.

10. Harvesting machine (42) comprising optical sensors for a harvesting machine (10) according to one of the preceding claims.

## Revendications

1. Machine de récolte (10), comportant un dispositif de ramassage (20) destiné à ramasser les végétaux récoltés, un dispositif de coupe (22), muni d'au moins une lame de coupe pour couper ou hacher les végétaux récoltés, et comportant un dispositif de contrôle (42) qui est utilisable pour générer un signal qui contient une information sur l'affûtage de la lame de coupe et/ou sur sa distance par rapport à une contre-lame (38), laquelle est comparée à une valeur de consigne, **caractérisée en ce que** le dispositif de contrôle (42) est relié à un capteur, qui surveille optiquement le dispositif de coupe (22) et/ou les végétaux coupés et délivre un signal, à partir duquel le dispositif de contrôle dérive l'information sur l'affûtage de la lame de coupe et/ou sur sa distance par rapport à une contre-lame (38).

2. Machine de récolte (10) selon la revendication 1, **caractérisée en ce qu'**il est prévu un dispositif d'affûtage (76) pour l'affûtage automatique de la lame de coupe, lequel est activé en fonction du signal du dispositif de contrôle (42).

3. Machine de récolte (10) selon la revendication 1 ou 2, **caractérisée en ce qu'**il est prévu un dispositif de réglage (40) pour le réglage automatique de la position de la contre-lame (38), lequel est activé en fonction du signal du dispositif de contrôle (42).

4. Machine de récolte (10) selon l'une quelconque des revendications 1 à 3, **caractérisée en ce que** le dispositif de contrôle (42) est relié à un capteur optique, dont la zone sensitive est dirigée vers le dispositif de coupe (22).

5. Machine de récolte (10) selon la revendication 4, **caractérisée en ce que** la zone sensitive du capteur optique est dirigée vers la contre-lame (38) et la zone adjacente du dispositif de coupe (22).

6. Machine de récolte (10) selon l'une quelconque des revendications 1 à 5, **caractérisée en ce que** le capteur optique est un capteur vidéo, en particulier une caméra (44, 50, 70), dont le signal de sortie est numérisé et traité au moyen d'un logiciel de traitement d'images.

7. Machine de récolte (10) selon l'une quelconque des revendications 4 à 6, **caractérisée en ce que** le dispositif de coupe (22) est éclairé en forme de point, en particulier par un laser (64), ou sur une surface.

8. Machine de récolte (10) selon l'une quelconque des revendications 1 à 7, **caractérisée en ce qu'**un capteur optique (68), en aval du dispositif de coupe (22), coopère avec les végétaux coupés et détecte la longueur des végétaux coupés.

9. Machine de récolte (10) selon la revendication 8, **caractérisée en ce que** le capteur optique (68) travaille dans le domaine du proche infrarouge.

10. Dispositif de contrôle (42) avec des capteurs optiques pour une machine de récolte (10) selon une des revendications précédentes.
